# EUROPÄISCHE PATENTSCHRIFT

(11) **EP 2 917 712 B1**
(45) Veröffentlichungstag und Bekanntmachung des Hinweises auf die Patenterteilung: **17.04.2019**
(21) Anmeldenummer: 13783862.9
(22) Anmeldetag: 27.09.2013
(51) Int. Cl.: G01K 7/22, G01K 1/08

(54) **TEMPERATURFÜHLER UND VERFAHREN ZUR HERSTELLUNG EINES TEMPERATURFÜHLERS**
TEMPERATURE PROBE AND METHOD FOR PRODUCING A TEMPERATURE PROBE
CAPTEUR DE TEMPÉRATURE ET PROCEDE DE PRODUCTION D'UN CAPTEUR DE TEMPÉRATURE

(30) Priorität: 12.11.2012 DE 102012110849
(43) Veröffentlichungstag der Anmeldung: 16.09.2015
(73) Patentinhaber: TDK Electronics AG, 81671 München (DE)
(72) Erfinder: IHLE, Jan, A-8071 Grambach (AT); KLOIBER, Gerald, A-8073 Feldkirchen (AT)
(74) Vertreter: Epping - Hermann - Fischer
(86) Internationale Anmeldenummer: PCT/EP2013/070245
(87) Internationale Veröffentlichungsnummer: WO 2014/072123

(56) Entgegenhaltungen:
- WO-A1-90/16074
- DE-A1- 4 329 312
- DE-A1-102006 015 384
- DE-A1-102006 031 344

## Beschreibung

Die Messung von Temperaturen für die Überwachung und Regelung in unterschiedlichsten Anwendungen erfolgt beispielsweise mit keramischen Heißleiter-Thermistorelementen (NTC thermistor, "negative temperature coefficient thermistor"), Silizium-Temperatursensoren (zum Beispiel sogenannten KTY-Temperatursensoren), Platin-Temperatursensoren (PRTD, "platinum resistance temperature detector") oder Thermoelementen (TC, "Thermocouple"). Für eine ausreichende mechanische Stabilität, zum Schutz gegen äußere Einflüsse sowie zur Vermeidung von Korrosion durch aggressive Medien und zur Vermeidung von temperaturbedingten Materialveränderungen durch die Gasatmosphäre in einem NTC-Material beziehungsweise in einer Elektrode sind keramische Sensorelemente üblicherweise mit einem Überzug aus einem Polymer oder einem Glas versehen. Die maximalen Einsatztemperaturen solcher Sensorelemente sind im Fall einer Polymerumhüllung auf zirka 200 °C und im Fall einer Glasumhüllung auf zirka 500 °C bis 700 °C begrenzt.

Die beschriebenen Sensorelemente können jedoch nicht ohne Weiteres für die Messung von sehr hohen Temperaturen und/oder in besonders aggressiven Medien dauerhaft eingesetzt werden. Um dennoch einen Einsatz in aggressiven Medien vornehmen zu können, werden die Sensorelemente oftmals in ein Kunststoff- oder Edelstahlgehäuse verbaut. Zur Herstellung eines thermischen Kontakts zum Element werden zusätzlich sehr häufig Vergussmaterialien verwendet. Ein großer Nachteil der so aufgebauten Systeme ist deren verzögerte Ansprechzeit aufgrund der zusätzlichen konstruktionsbedingten Wärmeübergänge und der geringen Wärmeleitung der verwendeten Materialien.

Um eine möglichst geringe Widerstandstoleranz der Sensorelemente zu erreichen, kann bei deren Herstellung vor einem Umhüllen der Sensorelemente der Widerstand durch eine mechanische Bearbeitung, beispielsweise durch Trimmen, durch Schleifen oder, im Fall von glasumhüllten Sensorelementen, durch Tempern, nachjustiert werden. Eine Nachjustierung des Widerstands bereits umhüllter Sensoren ist jedoch nur begrenzt möglich.

Die Druckschrift DE 10 2006 031 344 A1 beschreibt ein elektrisches Bauelement, bei dem ein Sensorelement in einer Plattenanordnung eingebettet ist.

Es ist eine zu lösende Aufgabe zumindest einiger Ausführungsformen einen Temperaturfühler anzugeben, der eine hohe Robustheit sowie eine geringe Ansprechzeit aufweist. Eine weitere Aufgabe zumindest einiger Ausführungsformen ist es, ein Verfahren zur Herstellung eines Temperaturfühlers anzugeben.

Diese Aufgaben werden durch einen Gegenstand und ein Verfahren gemäß den unabhängigen Patentansprüchen gelöst. Vorteilhafte Ausführungsformen und Weiterbildungen der Gegenstände gehen weiterhin aus den abhängigen Patentansprüchen, der nachfolgenden Beschreibung und aus den Zeichnungen hervor.

Ein Temperaturfühler weist erfindungsgemäß zumindest zwei erste Keramikplättchen, die jeweils eine Aussparung aufweisen, auf. In den Aussparungen ist jeweils ein NTC-Sensorelement angeordnet. Die Aussparungen können beispielsweise jeweils eine Kavität sein, die von einer Oberfläche des Keramikplättchen zu einer gegenüberliegenden Oberfläche des Keramikplättchens reichen. Die Aussparungen sind jeweils in lateraler Richtung, also in einer Richtung parallel zur Haupterstreckungsrichtung der ersten Keramikplättchen, vom Material des jeweiligen ersten Keramikplättchens umschlossen, so dass auch das jeweilige NTC-Sensorelement in lateraler Richtung vom Material des jeweiligen ersten Keramikplättchens umschlossen ist. Weiterhin weist der Temperaturfühler zumindest ein zweites Keramikplättchen auf, das zwischen den ersten Keramikplättchen angeordnet ist. Das zweite Keramikplättchen ist vorzugsweise unmittelbar zwischen den zwei ersten Keramikplättchen angeordnet, das heißt dass keine weiteren Keramikplättchen zwischen dem einen der zwei ersten Keramikplättchen und dem zweiten Keramikplättchen sowie zwischen dem zweiten Keramikplättchen und dem weiteren der zwei ersten Keramikplättchen angeordnet sind. Zwischen dem zweiten Keramikplättchen und den zwei ersten Keramikplättchen ist jeweils eine Elektrode angeordnet, die jeweils eines der NTC-Sensorelemente elektrisch kontaktieren.

Der Temperaturfühler weist weiterhin zwei dritte Keramikplättchen auf. Die ersten und das zweite Keramikplättchen sind zwischen den zwei dritten Keramikplättchen angeordnet. Vorzugsweise sind dabei keine weiteren Keramikplättchen zwischen den ersten und den dritten Keramikplättchen angeordnet. Die ersten, das zweite und die dritten Keramikplättchen bilden vorzugsweise einen Schichtenstapel. Zwischen den dritten Keramikplättchen und den ersten Keramikplättchen ist jeweils eine Elektrode angeordnet, die jeweils eines der NTC-Sensorelemente elektrisch kontaktieren. Die zwischen dem zweiten Keramikplättchen und den ersten Keramikplättchen sowie die zwischen den ersten und dritten Keramikplättchen angeordneten Elektroden können beispielsweise eines oder mehr Materialien ausgewählt aus Cu, Ag, Au, Pt, Mo und W aufweisen oder daraus bestehen. Weiterhin können die Elektroden eine Metalllegierung, wie zum Beispiel AgPd, aufweisen oder aus einer Metalllegierung bestehen. Beispielsweise können die Elektroden mittels eines Siebdruckverfahrens aufgebracht sein.

Die NTC-Sensorelemente sind erfindungsgemäß jeweils vollständig von den Keramikplättchen umschlossen. Erfindungsgemäß weisen die NTC-Sensorelemente jeweils mehrere Seitenflächen auf, die jeweils alle von Keramikplättchen umgeben sind. So können die NTC-Sensorelemente innerhalb der Keramikplättchen eingebettet sein. Des Weiteren sind die ersten, das zweite und die dritten Keramikplättchen und die NTC-Sensorelemente zu einem keramischen Körper versintert. Erfindungsgemäß sind die ersten, das zweite und die dritten Keramikplättchen sowie die NTC-Sensorelemente in einem gemeinsamen Sinterprozess zu dem keramischen Körper versintert, wobei die Keramikplättchen und die NTC-Sensorelemente vor diesem gemeinsamen Sinterprozess als noch nicht gesinterte Materialien, wie zum Beispiel als noch nicht gesinterte keramische Folien im Fall der Keramikplättchen oder als noch nicht gesinterte keramische Sensormaterialien im Falle der NTC-Sensorelemente, vorliegen. Durch die Verwendung von NTC-Sensorelementen können vorteilhafterweise Herstellkosten des Temperaturfühlers gering gehalten werden. Ein weiterer Vorteil von NTC-Sensorelementen beispielsweise gegenüber Thermoelementen oder metallischen Widerstandselementen, wie zum Beispiel Pt-Elementen, besteht in einer ausgeprägten negativen Widerstands-Temperatur-Charakteristik.

Gemäß einer weiteren Ausführungsform weist der Temperaturfühler eine Mehrzahl von zumindest drei ersten Keramikplättchen und eine Mehrzahl von zweiten Keramikplättchen auf. Die zumindest drei ersten Keramikplättchen weisen jeweils eine Aussparung auf, in denen ein NTC-Sensorelement angeordnet ist. Die ersten und zweiten Keramikplättchen sind abwechselnd übereinander zwischen den dritten Keramikplättchen angeordnet. Dabei ist jedes zweite Keramikplättchen unmittelbar zwischen zwei ersten Keramikplättchen angeordnet. Weiterhin ist zwischen den ersten und zweiten Keramikplättchen jeweils eine Elektrode zur Kontaktierung des jeweiligen NTC-Sensorelements angeordnet.

Gemäß einer weiteren Ausführungsform weist der Temperaturfühler zumindest zwei vierte Keramikplättchen auf, wobei die ersten, zweiten und dritten Keramikplättchen zwischen den zumindest zwei vierten Keramikplättchen angeordnet sind. Vorzugsweise sind die zwei vierten Keramikplättchen jeweils in direktem Kontakt mit den den ersten Keramikplättchen abgewandten Seitenflächen der dritten Keramikplättchen angeordnet. Beispielsweise weisen die vierten Keramikplättchen dieselbe Form und Größe wie die dritten Keramikplättchen auf und sind vollflächig mit den dritten Keramikplättchen verbunden, wobei zwischen den in Berührung stehenden dritten und vierten Keramikplättchen keine weiteren Elemente angeordnet sind. Die vierten Keramikplättchen sind vorzugsweise gemeinsam mit den dazwischen angeordneten Keramikplättchen sowie mit den NTC-Sensorelementen zum keramischen Körper versintert. Der Temperaturfühler kann darüber hinaus weitere vierte Keramikplättchen aufweisen, wobei die ersten, das zweite oder die zweiten, die dritten und die vierten Keramikplättchen zwischen den weiteren vierten Keramikplättchen angeordnet sind. Die weiteren vierten Keramikplättchen sind vorzugsweise ebenfalls mit den dazwischen angeordneten Keramikplättchen sowie mit den NTC-Sensorelementen gemeinsam versintert. Mittels der vierten Keramikplättchen kann die Stabilität und Robustheit des Temperaturfühlers erhöht werden.

Gemäß einer weiteren Ausführungsform weisen die NTC-Sensorelemente eine Perowskitstruktur umfassend die Elemente Y, Ca, Cr, Al, 0 auf. Weiterhin können die NTC-Sensorelemente auf Basis von Perowskiten das Element Sn aufweisen.

Gemäß einer weiteren Ausführungsform weisen die NTC-Sensorelemente jeweils ein Keramikmaterial mit einer Perowskitstruktur der allgemeinen chemischen Formel ABO₃ auf. Insbesondere für hochtemperaturstabile Temperaturfühler, die für hohe Anwendungstemperaturen geeignet sein sollen, werden NTC-Sensorelemente mit einem derartigen Keramikmaterial bevorzugt. Besonders bevorzugt weisen die NTC-Sensorelemente die Zusammensetzung (Y₁₋ₓCaₓ) (Cr_{1-y}Al_{y})O₃ mit x = 0,03 bis 0,05 und y = 0,85 auf.

Gemäß einer weiteren Ausführungsform weisen die NTC-Sensorelemente eine Spinellstruktur umfassend die Elemente Ni, Co, Mn, O auf. Die NTC-Sensorelemente auf Basis von Spinellen können weiterhin eines oder mehrere der folgenden Elemente aufweisen: Al, Fe, Cu, Zn, Ca, Zr, Ti, Mg.

Gemäß einer weiteren Ausführungsform weisen die NTC-Sensorelemente jeweils ein Keramikmaterial mit einer Spinellstruktur der allgemeinen chemischen Formel AB₂O₄ beziehungsweise B(A,B)O₄ auf. NTC-Sensorelemente mit einem derartigen Keramikmaterial werden insbesondere bei einem Temperaturfühler mit Anwendungstemperaturen bevorzugt. Gemäß einer besonders bevorzugten Ausführungsform weisen die NTC-Sensorelemente die Zusammensetzung Co_{3-(x+y})NiₓMn_{y}O₄ mit x = 1,32 und y = 1,32 auf.

Insbesondere können die Sensorelemente alle das gleiche Material aufweisen. Es ist aber auch denkbar, dass zumindest zwei Sensorelemente unterschiedliche Materialien aufweisen.

Gemäß einer weiteren Ausführungsform weisen die Keramikplättchen eine Keramik mit einer hohen Wärmeleitfähigkeit auf oder bestehen aus einer Keramik mit einer hohen Wärmeleitfähigkeit. Beispielsweise können die Keramikplättchen eine Keramik des Typs "HTCC" (HTCC: "high temperature co-fired ceramic") aufweisen oder daraus bestehen. Gemäß einer besonders bevorzugten Ausführungsform weisen die Keramikplättchen Aluminiumoxid auf oder bestehen aus Aluminiumoxid. Vorteilhafterweise weist das Aluminiumoxid eine Reinheit von zumindest 95 % bis 99,9 % oder höher auf. Vorteilhafterweise nimmt bei einer höheren Reinheit die Robustheit bezüglich der mechanischen Festigkeit und chemischen Beständigkeit des Temperaturfühlers zu. Insbesondere für den Fall, dass das NTC-Sensorelement eine Keramik mit Perowskitstruktur aufweist, wird bevorzugt, dass die Keramikplättchen eine Keramik des Typs "HTCC", insbesondere Aluminiumoxid, aufweisen. Weiterhin ist es auch möglich eine Keramik des Typs "HTCC" mit Spinellstruktur zu verwenden.

Gemäß einer weiteren Ausführungsform weisen die Keramikplättchen eine Glaskeramik auf oder bestehen aus einer Glaskeramik. Beispielsweise können die Keramikplättchen eine LTCC-Glaskeramik (LTCC: "low temperature co-fired ceramic"), wie zum Beispiel LTCC-GBC (GBC: "glass bonded ceramics") aufweisen oder daraus bestehen. Keramikplättchen, die eine Glaskeramik aufweisen, werden insbesondere bei NTC-Sensorelementen mit Spinellstruktur bevorzugt. Vorzugsweise ist die Glaskeramik hinsichtlich ihrer Sintertemperatur an die Sintertemperatur der NTC-Sensorelemente angepasst.

Vorteilhafterweise ist ein hier beschriebener Temperaturfühler durch die vollkeramische Kapselung der NTC-Sensorelemente auch in aggressiven Medien bei Temperaturen bis zu 1200 °C besonders langzeitstabil.

Weiterhin sind die Ansprechzeiten aufgrund der vollkeramischen Kapselung und des darin begründeten Materialverbundes zu den NTC-Sensorelementen sehr gering und können beispielsweise, je nach Anzahl, Dicke und Material der Keramikplättchen, bei unter drei Sekunden, vorteilhafterweise bei unter einer Sekunde liegen. Bei sehr dünnen Dicken der Keramikplättchen und/oder bei einer geringen Anzahl an vierten Keramikplättchen kann die Ansprechzeit des Temperaturfühlers sogar nur wenige Millisekunden betragen.

Gemäß einer weiteren Ausführungsform weisen die Keramikplättchen eine Dicke zwischen 10 µm und 100 µm auf. Gemäß einer besonders bevorzugten Ausführungsform weisen die Keramikplättchen eine Dicke zwischen 15 µm und 30 µm auf. Dadurch können vorteilhafterweise besonders geringe Ansprechzeiten des Temperaturfühlers erzielt werden.

Gemäß einer weiteren Ausführungsform weisen die NTC-Sensorelemente jeweils einen Abstand von mindestens 0,2 mm zu allen Oberflächen des Temperaturfühlers auf. Dadurch kann eine ausreichende Robustheit des Temperaturfühlers erreicht werden.

Erfindungsgemäß weist der Temperaturfühler zwei auf dem keramischen Körper aufgebrachte Anschlusskappen auf. Die Anschlusskappen sind jeweils zumindest mit zwei Elektroden elektrisch leitend verbunden. Die Anschlusskappen können beispielsweise an einem Ende des Temperaturfühlers aufgebracht sein und jeweils vier Seiten des Temperaturfühlers teilweise bedecken. Die Anschlusskappen dienen der externen elektrischen Kontaktierung des Temperaturfühlers. Beispielsweise können die Anschlusskappen mittels eines Eintauchprozesses in eine Metallisierungspaste, mittels Sputtern, mittels Flammspritzen oder mittels Plasmaspritzen hergestellt sein. Die Anschlusskappen sind erfindungsgemäß beide an demselben Ende des keramischen Körpers aufgebracht.

Erfindungsgemäß ist der Widerstand des Temperaturfühlers durch eine mechanische Bearbeitung zumindest einer der Anschlusskappen einstellbar. Die mechanische Bearbeitung kann beispielsweise ein Trimm- oder Schleifprozess sein. Für die Einstellung der Widerstandstoleranz kann beispielsweise bei Nenntemperatur der Widerstand des Temperaturfühlers gemessen und gleichzeitig oder anschließend zumindest eine der Anschlusskappen soweit abgeschliffen werden, bis der Widerstand innerhalb einer gewünschten Toleranz liegt. Dabei werden erfindungsgemäß eine oder mehrere elektrische Verbindungen zu einer oder mehreren Elektroden mechanisch getrennt.

Vorteilhafterweise kann der Temperaturfühler so mit sehr engen Widerstandstoleranzen gefertigt werden. Beispielsweise lassen sich Toleranzen von unter 1 %, vorteilhafterweise bis 0,1 %, erzielen.

Weiterhin wird ein Verfahren zur Herstellung eines Temperaturfühlers angegeben. Der dadurch herstellbare oder hergestellte Temperaturfühler kann eines oder mehrere Merkmale der vorgenannten Ausführungsformen aufweisen. Die vorher und im Folgenden beschriebenen Ausführungsformen gelten gleichermaßen für den Temperaturfühler wie auch für das Verfahren zur Herstellung des Temperaturfühlers.

Erfindungsgemäß werden zumindest zwei erste keramische Folien, zumindest eine zweite keramische Folie und zumindest zwei dritte keramische Folien bereitgestellt. Beispielsweise sind die keramischen Folien mittels eines Foliengießprozesses oder mittels eines Folienziehprozesses, vorzugsweise mit Hilfe von organischen Bindern, hergestellt. In einem weiteren Verfahrensschritt wird in den ersten keramischen Folien jeweils eine Aussparung ausgestanzt. Die Aussparungen sind vorzugsweise Kavitäten, die sich jeweils von einer Oberfläche einer ersten keramischen Folie zu einer gegenüberliegenden Oberfläche derselben ersten keramischen Folie erstrecken.

Erfindungsgemäß wird in einem weiteren Verfahrensschritt auf eine der dritten Keramikfolien eine Elektrode, beispielsweise mittels Siebdruckverfahren, aufgebracht. Anschließend wird eine der zwei ersten keramischen Folie unmittelbar auf der einen dritten keramischen Folie angeordnet, wobei die auf der einen dritten keramischen Folie aufgebrachte Elektrode zumindest teilweise in der Aussparung der einen ersten keramischen Folie angeordnet ist. Danach wird keramisches Sensormaterial in die Aussparung der ersten Folie aufgebracht, sodass das keramische Sensormaterial zumindest teilweise die Elektrode der einen dritten keramischen Folie bedeckt. Vorzugsweise wird dabei das keramische Sensormaterial mittels Siebdruckverfahren aufgebracht. In einem nachfolgenden Verfahrensschritt wird eine weitere Elektrode auf der einen ersten keramischen Folie mittels Siebdruckverfahren aufgebracht, sodass die weitere Elektrode das keramische Sensormaterial berührt. Anschließend wird die zweite keramische Folie auf die eine erste keramische Folie aufgebracht.

Erfindungsgemäß wird in einem weiteren Verfahrensschritt eine Elektrode auf die zweite keramische Folie, vorzugsweise mittels Siebdruckverfahren, aufgebracht. In einem nächsten Verfahrensschritt wird die weitere erste keramische Folie derart auf die zweite keramische Folie aufgebracht, dass die auf der zweiten keramischen Folie aufgebrachte Elektrode innerhalb der Aussparung der weiteren ersten keramischen Folie angeordnet ist. Nachfolgend wird wieder keramisches Sensormaterial in der Aussparung aufgebracht, sodass das keramische Sensormaterial mit der darunter liegenden Elektrode in Kontakt steht. In einem weiteren Verfahrensschritt wird die zweite der dritten keramischen Folien auf die erste keramische Folie aufgebracht. Durch die beschriebenen Verfahrensschritte entsteht ein Verbund aus übereinander gestapelten keramischen Folien und eingebetteten Sensormaterialien. Das Anordnen einer keramischen Folie auf einer anderen keramischen Folie kann beispielsweise mittels Laminieren erfolgen.

Gemäß einer weiteren Ausführungsform wird der hergestellte Verbund aus übereinander gestapelten keramischen Folien und eingebetteten Sensormaterialien verpresst. Dadurch kann vorteilhafterweise ein guter Materialverbund gewährleistet werden.

Gemäß einer weiteren Ausführungsform wird der Verbund aus übereinander gestapelten keramischen Folien und eingebetteten Sensormaterialien mittels eines thermischen Entbinderungsprozesses von organischen Anteilen befreit. Erfindungsgemäß wird der Verbund aus keramischen Folien und Sensormaterial gemeinsam gesintert. Dabei werden die keramischen Folien zu den oben beschriebenen miteinander verbundenen Keramikplättchen versintert. Das Sintern erfolgt vorzugsweise bei einer Temperatur zwischen 1600 °C und 1700 °C, insbesondere wenn die keramischen Sensormaterialien, die nach dem Sintern die NTC-Sensorelemente bilden, eine Keramik des Typs "HTCC", beispielsweise mit einer Perowskitstruktur oder einer Spinellstruktur, aufweisen. Alternativ erfolgt das Sintern bei einer Temperatur zwischen 1200 °C und 1250 °C, insbesondere wenn das die keramischen Sensormaterialien beziehungsweise die NTC-Sensorelemente eine Keramik des Typs "LTCC", beispielsweise mit einer Spinellstruktur, aufweisen.

Erfindungsgemäß werden nach der Sinterung zumindest zwei Anschlusskappen auf den keramischen Körper aufgebracht. Dazu wird der keramische Körper in eine Metallisierungspaste getaucht und die aufgebrachte Metallisierungspaste anschließend eingebrannt. Gemäß einer weiteren Ausführungsform werden die Anschlusskappen mittels Sputtern, mittels Flammspritzen oder mittels Plasmaspritzen aufgebracht. Jede der Anschlusskappen kontaktiert vorzugsweise zumindest zwei Elektroden. Mittels der zwei Anschlusskappen werden die NTC-Sensorelemente parallel angeschlossen. Die Anschlusskappen dienen der externen elektrischen Kontaktierung der NTC-Sensorelemente. Die Anschlusskappen sind erfindungsgemäß beide an demselben Ende des keramischen Körpers aufgebracht.

Gemäß einer weiteren Ausführungsform werden neben den ersten, der zweiten und den dritten keramischen Folien weiterhin zumindest zwei vierte keramische Folien bereitgestellt. In einem Verfahrensschritt, der vor dem Schritt des Anordnens der ersten keramischen Folie auf der einen dritten keramischen Folie erfolgt, wird die eine dritte keramische Folien unmittelbar auf einer der vierten keramischen Folien angeordnet. Weiterhin wird in einem Verfahrensschritt, der nach dem Schritt des Anordnens der weiteren dritten keramischen Folie auf der weiteren ersten keramischen Folie erfolgt, die weitere der vierten Folien unmittelbar auf der weiteren dritten Folie angeordnet. Anschließend wird der Verbund aus ersten, zweiten, dritten und vierten keramischen Folien unter Bildung der oben beschriebenen Keramikplättchen miteinander versintert. Die vierten keramischen Folien dienen als Grund- und Deckfolien und stabilisieren vorteilhafterweise den Temperaturfühler.

Zwischen den dritten keramischen Folien können auch eine Mehrzahl von zumindest drei ersten keramischen Folien und eine Mehrzahl von zumindest zwei zweiten keramischen Folien gemäß der vorherigen Beschreibung abwechselnd aufeinander aufgebracht werden, um zumindest drei Sensorelemente übereinander anzuordnen.

Gemäß einer weiteren Ausführungsform wird, vorzugsweise bei Nenntemperatur, der Widerstand des Temperaturfühlers gemessen. Anschließend kann durch eine mechanische Bearbeitung zumindest einer der Anschlusskappen der Widerstand des Temperaturfühlers eingestellt. Die zumindest eine Anschlusskappe kann so lange mechanisch bearbeitet werden, bis der Widerstand des Temperaturfühlers innerhalb eines Toleranzwertes liegt. Die mechanische Bearbeitung der Anschlusskappe kann beispielsweise durch Schleifen oder Trimmen erfolgen.

Durch die Herstellung des Temperaturfühlers mittels der hier beschriebenen keramischen Mehrlagentechnologie ist vorteilhafterweise eine sehr kleine Bauform des Temperaturfühlers mit einer hohen mechanischen Festigkeit herstellbar. Weiterhin wird insbesondere durch eine erzielte stabile Ummantelung der NTC-Sensorelemente eine gute Langzeitmedienbeständigkeit und Robustheit des Temperaturfühlers in Verbindung mit einer geringen Ansprechzeit erreicht. Beispielsweise ist der hier beschriebene Temperatursensor durch eine vollkeramische Kapselung der NTC-Sensorelemente bei bis zu ca. 1100 °C auch in besonders aggressiven Medien beziehungsweise Gasen einsetzbar. Weiterhin lassen sich vorteilhafterweise Temperaturfühler mit sehr engen Widerstandstoleranzen herstellen, die sich über die Anschlusskappen einstellen lassen.

Gemäß einer weiteren Ausführungsform wird eine Mehrzahl von Temperaturfühlern hergestellt, indem in den ersten keramischen Folien jeweils eine Mehrzahl von Aussparungen ausgestanzt wird und nach dem Anordnen der ersten keramischen Folien auf der dritten keramischen Folie jeweils keramisches Sensormaterial in die Mehrzahl an Aussparungen eingebracht wird. Vor dem Sinterprozess und/oder dem Entbinderungsprozess wird der Verbund aus keramischen Folien durch einen Schneideprozess in einzelne Elemente vereinzelt.

Weitere Vorteile und vorteilhafte Ausführungsformen des Temperaturfühlers ergeben sich aus den im Folgenden in Verbindung mit den Figuren 1A bis 6 beschriebenen Ausführungsformen.

Es zeigen:
- Figuren 1A bis 1J: ein Verfahren zur Herstellung eines Temperaturfühlers gemäß einem Ausführungsbeispiel,
- Figur 2: einen weiteren Verfahrensschritt für ein Verfahren zur Herstellung eines Temperaturfühlers gemäß einem weiteren Ausführungsbeispiel,
- Figur 3: eine Schnittansicht eines Temperaturfühlers gemäß einem weiteren Ausführungsbeispiel,
- Figur 4: eine schematische Ansicht eines Temperaturfühlers gemäß einem weiteren Ausführungsbeispiel,
- Figur 5: eine schematische Ansicht des Temperaturfühlers aus Figur 4 in aufgeschnittener Form,
- Figur 6: eine vergrößerte Darstellung eines Ausschnitts des Temperaturfühlers aus Figur 5 und
- Figur 7: ein Ersatzschaltbild eines Temperaturfühlers gemäß einem weiteren Ausführungsbeispiel.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente wie zum Beispiel Schichten, Bauteile und Bereiche zur besseren Darstellbarkeit und/oder zum besseren Verständnis übertrieben dick oder groß dimensioniert dargestellt sein.

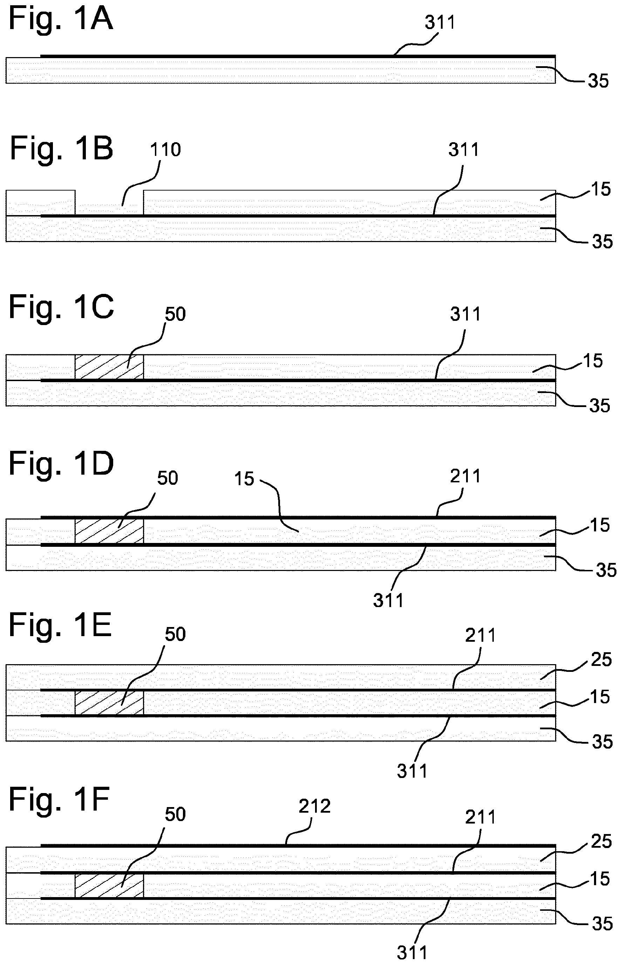

Die Figuren 1A bis 1J zeigen ein Verfahren zur Herstellung eines Temperaturfühlers 1 gemäß einem Ausführungsbeispiel. Dabei werden zunächst zwei erste keramische Folien 15, 16, die jeweils eine Aussparung 110, 120 aufweisen, eine zweite keramische Folie 25 und zwei dritte keramische Folien 35, 36 sowie keramisches Sensormaterial 50 bereitgestellt. Die keramischen Folien 15, 16, 25, 35, 36 weisen Aluminiumoxid auf. Alternativ können die keramischen Folien 15, 16, 25, 35, 36 ein anderes, vorzugsweise gut wärmeleitendes Keramikmaterial oder eine Glaskeramik aufweisen. Die keramischen Folien 15, 16, 25, 35, 36 können beispielsweise mittels eines Foliengießprozesses oder mittels eines Folienziehprozesses hergestellt werden und eine Dicke zwischen 10 µm und 100 µm, bevorzugt zwischen 15 µm und 30 µm, aufweisen.

Das keramische Sensormaterial 50 weist eine Perowskitstruktur umfassend die Elemente Y, Ca, Cr, Al, 0 auf. Insbesondere weist das keramische Sensormaterial 50 die Zusammensetzung (Y₁₋ₓCaₓ) (Cr_{1-y}Al_{y}) O₃ mit x = 0,03 bis 0,05 und y = 0,85 auf. Alternativ kann das keramische Sensormaterial 50 eine Spinellstruktur umfassend die Elemente Ni, Co, Mn, O aufweisen. Derartiges keramisches Sensormaterial 50 kann beispielsweise die Zusammensetzung Co_{3-(x+y)}NiₓMn_{y}O₄ mit x = 1,32 und y = 1,32 aufweisen.

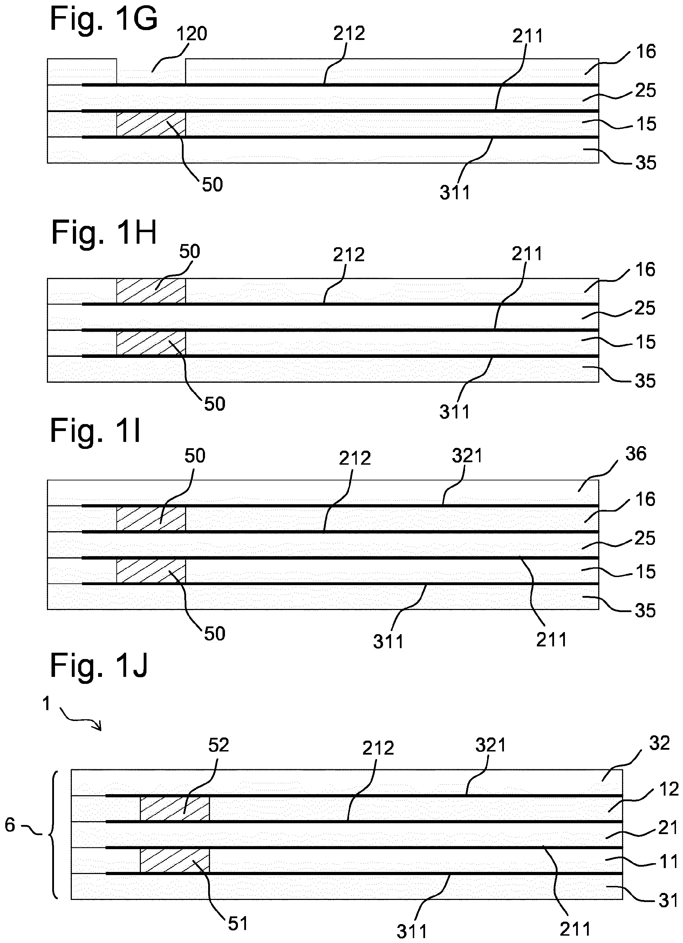

In einem ersten Verfahrensschritt, der in der Figur 1A dargestellt ist, wird eine Elektrode 311 mittels Siebdruckverfahren auf eine der dritten keramischen Folien 35 aufgebracht. Danach wird eine der ersten keramischen Folien 15 in einem in Figur 1B gezeigten Verfahrensschritt derart auf die eine dritte keramische Folie 35 aufgebracht, dass die Elektrode 311 zumindest teilweise innerhalb der Aussparung 110 der einen ersten keramischen Folie 15 angeordnet ist. In einem weiteren Verfahrensschritt, der in Figur 1C dargestellt ist, wird keramisches Sensormaterial 50 in die Aussparung 110 eingebracht, sodass das keramische Sensormaterial 50 die Elektrode 311 berührt. Anschließend wird in einem in der Figur 1D gezeigten Verfahrensschritt wiederum eine Elektrode 211 mittels Siebdruckverfahren auf die eine erste keramische Folie 15 aufgebracht, sodass die Elektrode 211 das keramische Sensormaterial 50 berührt. Anschließend wird im Verfahrensschritt gemäß Figur 1E die zweite keramische Folie 25 auf der einen ersten keramischen Folie 15 angeordnet. In einem sich daran anschließenden, in Figur 1F gezeigten Verfahrensschritt wird eine Elektrode 212 auf die zweite keramische Folie 25 aufgebracht. Nachfolgend wird die weitere erste keramische Folie 16, die die Aussparung 120 aufweist, in dem in der Figur 1G gezeigten Verfahrensschritt auf die zweite keramische Folie 25 aufgebracht, sodass die Elektrode 212 zumindest teilweise innerhalb der Aussparung 120 angeordnet ist. In dem in Figur 1H dargestellten Verfahrensschritt wird wiederum Sensormaterial 50 mittels Siebdruckverfahren in die Aussparung 120 eingebracht. In einem weiteren, in Figur 1I gezeigten Verfahrensschritt wird die weitere dritte Folie 36 auf der weiteren ersten keramischen Folie 16 aufgebracht. Anschließend wird der Verbund aus keramischen Folien in dem in Figur 1J gezeigten Verfahrensschritt zu einem keramischen Körper 6 versintert, wobei die ersten, die zweite, und die dritten keramischen Folien 15, 16, 25, 35, 36 zu miteinander verbundenen ersten, zweiten und dritten Keramikplättchen 11, 12, 21, 31, 32 versintert werden. Das keramische Sensormaterial 50 wird beim Versintern zu NTC-Sensorelementen 51, 52.

Alternativ zu den in Verbindung mit den Figuren 1D und 1E gezeigten Verfahrensschritten ist es auch möglich, eine zweite keramische Folie 25, die bereits mit einer Elektrode 211 bedruckt ist, auf der ersten keramischen Folie 15 mit dem keramischen Sensormaterial 50 anzuordnen.

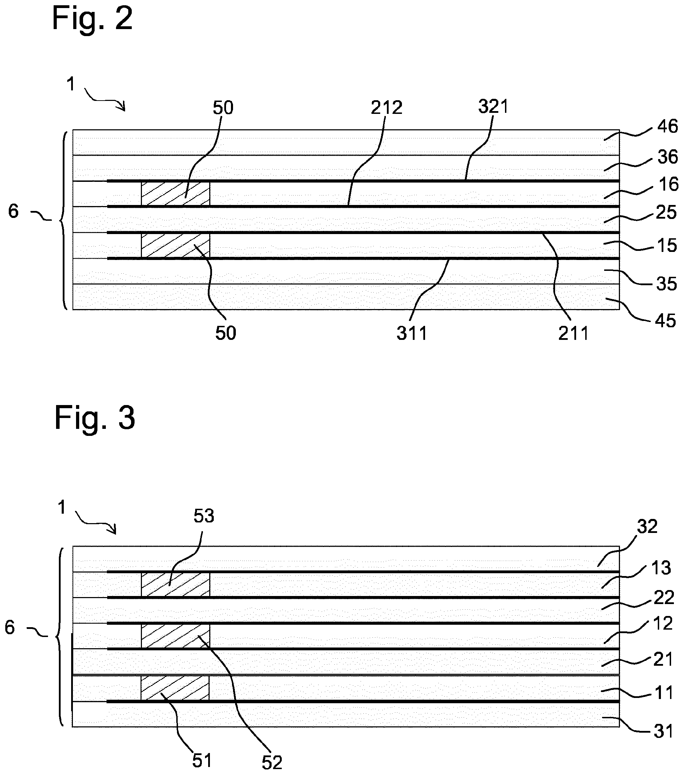

Weiterhin ist es möglich, dass, wie in Figur 2 gezeigt ist, zwei vierte keramische Folien 45, 46 bereitgestellt werden und die eine dritte keramische Folie 35 in einem Verfahrensschritt, der vor dem in Figur 1A gezeigten Verfahrensschritt erfolgt, auf eine der vierten keramischen Folien 45 aufgebracht wird. Anschließend folgen die bereits in Zusammenhang mit den Figuren 1A bis 1I erläuterten Verfahrensschritte, bevor in einem weiteren Verfahrensschritt, der vor dem gemeinsamen Sintern des Verbundes aus keramischen Folien erfolgt, die weitere vierte keramische Folie 46 auf die weitere dritte keramische Folie 36 aufgebracht wird. Die vierten keramischen Folien 45, 46 bilden so eine Grund- und Deckfolie des Verbundes aus keramischen Folien. Anschließend werden die keramischen Folien 15, 16, 22, 35, 36, 45, 46 und das in den keramischen Folien 15, 16, 22, 35, 36, 45, 46 eingebettete Sensormaterial 50 gemeinsam zu einem keramischen Körper 6 versintert.

Das Sintern erfolgt je nach Wahl des Keramikmaterials im Falle einer Keramik vom "LTCC"-Typ beispielsweise bei einer Temperatur zwischen 1100 °C und 1300 °C, etwa zwischen 1200 °C und 1250 °C. Alternativ kann das Sintern im Falle einer Keramik vom "HTCC"-Typ bei einer Temperatur zwischen 1600 °C und 1700 °C erfolgen.

Anschließend werden mindestens zwei Anschlusskappen 71, 72 mittels eines Tauchverfahrens durch Eintauchen in eine Metallisierungspaste auf den keramischen Körper 6 aufgebracht, so dass die Anschlusskappen 71, 72 jeweils mit zumindest zwei der Elektroden 211, 212, 311, 321 elektrisch leitend verbunden sind. Alternativ können die Anschlusskappen 71, 72 auch mittels Sputtern, mittels Flammspritzen oder mittels Plasmaspritzen aufgebracht werden.

Nachfolgend wird der Widerstand des so hergestellten Temperaturfühlers 1 bei Nenntemperatur gemessen. Danach wird durch eine mechanische Bearbeitung zumindest einer der Anschlusskappen 71, 72 der Widerstand des Temperaturfühlers 1 eingestellt bis der Widerstand des Temperaturfühlers 1 innerhalb eines vorgegebenen Toleranzwertes liegt. Die mechanische Bearbeitung der zumindest einen der Anschlusskappen 71, 72 kann beispielsweise durch Schleifen oder Trimmen erfolgen. Bei der mechanischen Bearbeitung der zumindest einen der Anschlusskappen 71, 72 werden eine oder mehrere Verbindungen zu den Elektroden 211, 212, 311, 321 mechanisch getrennt. Somit lassen sich Toleranzen von unter 1 %, vorteilhafterweise bis 0,1 %, einstellen.

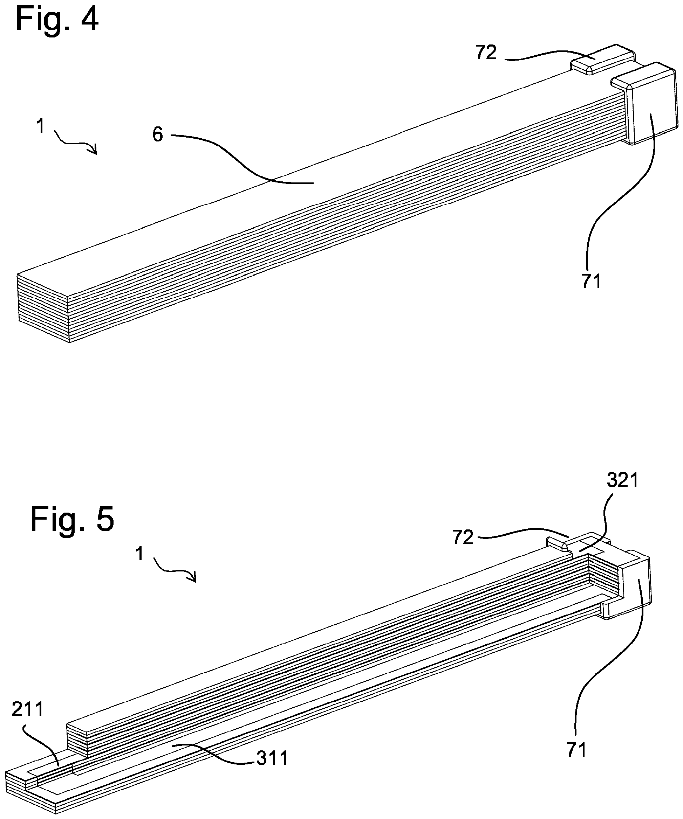

In Figur 3 ist eine Schnittansicht eines Temperaturfühler 1 gemäß einem weiteren Ausführungsbeispiel gezeigt, der beispielsweise durch das im Zusammenhang mit den Figuren 1A bis 1J beschriebene Verfahren hergestellt werden kann. Der Temperaturfühler 1 weist drei erste Keramikplättchen 11, 12, 13 auf, die jeweils lateral ein NTC-Sensorelement 51, 52, 53 umschließen. Zwischen den ersten Keramikplättchen 11, 12, 13 ist jeweils ein zweites Keramikplättchen 21, 22 angeordnet. Figur 4 zeigt einen Temperaturfühler 1, der beispielsweise durch das im Zusammenhang mit den Figuren 1A bis 1J und 2 beschriebene Verfahren hergestellt werden kann. Der Temperaturfühler 1 weist zu einem keramischen Körper 6 versinterte Keramikplättchen 11, 12, 21, 31, 32 und in den keramischen Körper 6 eingebettete NTC-Sensorelemente 51, 52 sowie zwei auf dem keramischen Körper aufgebrachte Anschlusskappen 71, 72 auf. Die äußeren Abmessungen des Temperaturfühlers 1 betragen 10 mm x 1 mm x 0,45 mm (Länge x Breite x Höhe) und die NTC-Sensorelemente 51, 52 weisen jeweils einen Abstand von mindestens 0,2 mm zur Oberfläche des keramischen Körpers 6 auf.

In Figur 5 ist der Temperaturfühler 1 aus Figur 4 in teilweise aufgeschnittener Form gezeigt. Dabei ist zu erkennen, dass jeweils mehrere der Elektroden 211, 212, 311, 321 einer der zwei Anschlusskappen 71, 72 elektrisch leitend verbunden sind.

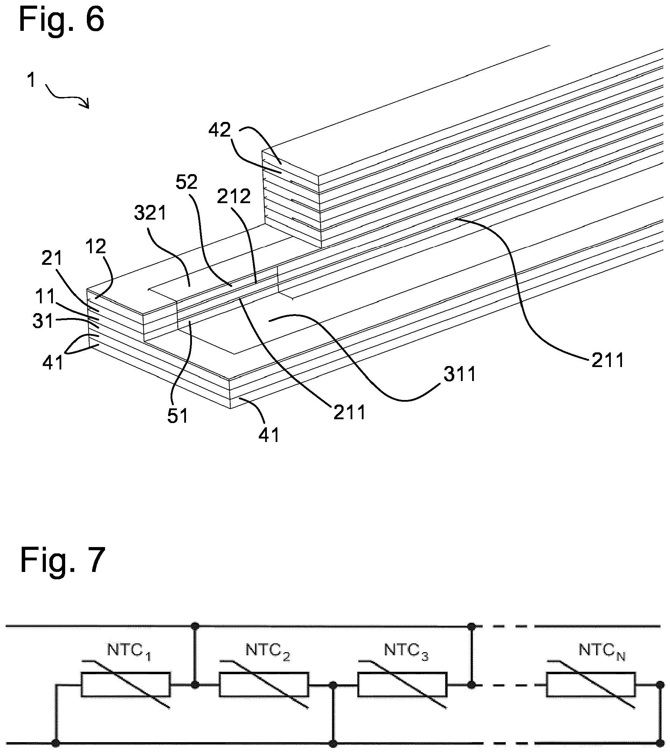

Figur 6 zeigt einen vergrößerten Ausschnitt des Temperaturfühlers 1 aus Figur 5, in dem zu erkennen ist, dass der Temperaturfühler 1 zusätzlich noch eine Mehrzahl von vierten Keramikplättchen 41, 42 aufweist, die die ersten Keramikplättchen 11, 12, das zweite Keramikplättchen 21 und die zwei dritten Keramikplättchen 31, 32 umgeben. Dadurch kann eine besonders hohe Stabilität und Robustheit des Temperaturfühlers 1 gewährleistet werden.

Der Temperaturfühler 1 weist durch die vollkeramische Kapselung der NTC-Sensorelemente 51, 52, die mittels keramischer Mehrlagentechnologie erreicht wird, eine besonders kleine Bauform auf zusammen mit einer sehr hohen mechanischen Festigkeit. Weiterhin zeichnet sich der Temperaturfühler 1 durch sehr geringe Ansprechzeiten sowie die Möglichkeit, Widerstandstoleranzen über eine mechanische Bearbeitung der Anschlusskappen 71, 72 einzustellen, aus.

In Figur 7 ist ein Ersatzschaltbild eines Temperaturfühlers 1 mit einer Anzahl von N NTC-Sensorelementen gezeigt, die mit NTC₁, ... NTC_{N} bezeichnet sind. Durch das oben beschriebene mechanische Bearbeiten zumindest einer der Anschlusskappen 71, 72 können einzelne NTC-Sensorelemente 51, 52, 53 zur Einstellung des Widerstands "abgeschaltet" werden.

### Bezugszeichenliste

- 1: Temperaturfühler
- 11, 12, 13: erstes Keramikplättchen
- 15, 16: erste keramische Folie
- 110, 120, 130: Aussparung
- 21, 22: zweites Keramikplättchen
- 25, 26: zweite keramische Folie
- 211, 212, 311, 321: Elektrode
- 31, 32: drittes Keramikplättchen
- 35, 36: dritte keramische Folie
- 41, 42: viertes Keramikplättchen
- 45, 46: vierte keramische Folie
- 51, 52, 53: NTC-Sensorelement
- 50: keramisches Sensormaterial
- 6: keramischer Körper
- 71, 72: Anschlusskappe

## Patentansprüche

1. Temperaturfühler (1), aufweisend
- zumindest zwei erste Keramikplättchen (11, 12), die jeweils eine Aussparung (110, 120) aufweisen, in der jeweils ein NTC-Sensorelement (51, 52) angeordnet ist,
- zumindest ein zweites Keramikplättchen (21), das zwischen den ersten Keramikplättchen (11, 12) angeordnet ist, wobei zwischen dem zweiten Keramikplättchen (21) und den zwei ersten Keramikplättchen (11, 12) jeweils eine Elektrode (211, 212) angeordnet ist, die jeweils eines der NTC-Sensorelemente (51, 52) elektrisch kontaktiert,
- zwei dritte Keramikplättchen (31, 32), wobei die ersten und das zweite Keramikplättchen (11, 12, 21) zwischen den zwei dritten Keramikplättchen (31, 32) angeordnet sind, und wobei zwischen den dritten Keramikplättchen (31, 32) und den ersten Keramikplättchen (11, 12) jeweils eine Elektrode (311, 321) angeordnet ist, die jeweils eines der NTC-Sensorelemente (51, 52) elektrisch kontaktiert,
- wobei die NTC-Sensorelemente (51, 52) jeweils mehrere Seitenflächen aufweisen, die alle von Keramikplättchen (11, 12, 21, 31, 32) umgeben sind und
- wobei die ersten, das zweite und die dritten Keramikplättchen (11, 12, 21, 31, 32) und die NTC-Sensorelemente (51, 52) durch gemeinsame Sinterung des Materials der Keramikplättchen (11, 12, 21, 31, 32) und des Materials der Sensorelemente (51, 52) zu einem keramischen Körper (6) versintert sind,
- und aufweisend zwei auf dem keramischen Körper (6) aufgebrachte Anschlusskappen (71, 72), die jeweils mit zumindest zwei Elektroden (211, 212, 311, 321) elektrisch leitend verbunden sind und beide an demselben Ende des keramischen Körpers (6) aufgebracht sind,
- wobei die Anschlusskappen (71, 72) derart ausgebildet sind, dass durch eine mechanische Bearbeitung zumindest einer der Anschlusskappen (71, 72) ein oder mehrere Verbindungen von der zumindest einen Anschlusskappe (71, 72) zu ein oder mehreren der Elektroden (211, 212, 311, 321) trennbar ist, so dass der Widerstand des Temperaturfühlers (1) einstellbar ist.

2. Temperaturfühler nach Anspruch 1,
- bei dem die Keramikplättchen (11, 12, 21, 31, 32) und die NTC-Sensorelemente (51, 52) als ungesinterte Materialien zusammengefügt und in einem gemeinsamen Sinterprozess zu dem keramischen Körper (6) versintert sind.

3. Temperaturfühler nach einem der vorhergehenden Ansprüche, aufweisend
- eine Mehrzahl von zumindest drei ersten Keramikplättchen (11, 12, 13), die jeweils eine Aussparung (110, 120, 130) aufweisen, in der ein NTC-Sensorelement (51, 52, 53) angeordnet ist, und
- eine Mehrzahl von zweiten Keramikplättchen (21, 22),
- wobei die ersten und zweiten Keramikplättchen (11, 12, 13, 21, 22) abwechselnd übereinander zwischen den dritten Keramikplättchen (31, 32) angeordnet sind,
- wobei jedes zweite Keramikplättchen (21, 22) unmittelbar zwischen zwei ersten Keramikplättchen (11, 12, 13) angeordnet ist, und
- wobei zwischen den ersten und zweiten Keramikplättchen (11, 12, 13, 21, 22) jeweils eine Elektrode (211, 212) zur Kontaktierung der NTC-Sensorelemente (51, 52, 53) angeordnet ist.

4. Temperaturfühler nach einem der vorhergehenden Ansprüche, aufweisend zumindest zwei vierte Keramikplättchen (41, 42), wobei die ersten, zweiten und dritten Keramikplättchen (11, 12, 21, 31, 32) zwischen den zumindest zwei vierten Keramikplättchen (41, 42) angeordnet sind und wobei die zumindest zwei vierten Keramikplättchen (41, 42) gemeinsam mit den ersten, zweiten und dritten Keramikplättchen (11, 12, 21, 31, 32) und den NTC-Sensorelementen (51, 52) zum keramischen Körper (6) versintert sind.

5. Temperaturfühler nach einem der vorhergehenden Ansprüche, wobei die NTC-Sensorelemente (51, 52) eine Perowskitstruktur umfassend die Elemente Y, Ca, Cr, Al, O oder eine Spinellstruktur umfassend die Elemente Ni, Co, Mn, O aufweisen und wobei die Keramikplättchen (11, 12, 21, 31, 32, 41, 42) Aluminiumoxid oder eine Glaskeramik aufweisen oder aus Aluminiumoxid oder einer Glaskeramik bestehen.

6. Temperaturfühler nach einem der vorhergehenden Ansprüche,
bei dem ein oder mehrere Verbindungen von den Anschlusskappen (71, 72) zu ein oder mehreren der Elektroden (211, 212, 311, 321) getrennt sind, um den Widerstand des Temperaturfühlers (1) einzustellen.

7. Verfahren zur Herstellung eines Temperaturfühlers (1) gemäß einem der Ansprüche 1 bis 6, mit den Schritten
- Bereitstellen mehrerer ungesinterter keramischer Folien (15, 16, 25, 35, 26) zur Ausbildung der Keramikplättchen (11, 12, 21, 31, 32),
- Einbringen von ungesintertem Sensormaterial (50) in Aussparungen (110, 120, 130) wenigstens zweier Keramikplättchens (11, 12, 21, 31, 32) zur Ausbildung der Sensorelemente (51, 52) und Aufbringen von Elektroden auf die keramischen Folien zur Kontaktierung der Sensorelemente (51, 52),
- gemeinsames Versintern der keramischen Folien (15, 16, 25, 35, 36) zu einem keramischen Körper,
- Aufbringen zumindest zweier Anschlusskappen (71, 72) an demselben Ende des keramischen Körpers (6), so dass die Anschlusskappen (71, 72) jeweils mit zumindest zwei Elektroden (211, 212, 311, 321) elektrisch leitend verbunden sind,
- wobei die Anschlusskappen (71, 72) derart ausgebildet sind, dass durch eine mechanische Bearbeitung zumindest einer der Anschlusskappen (71, 72) ein oder mehrere Verbindungen von der zumindest einen Anschlusskappe (71, 72) zu ein oder mehreren der Elektroden (211, 212, 311, 321) trennbar sind, so dass der Widerstand des Temperaturfühlers (1) einstellbar ist.

8. Verfahren nach Anspruch 7, wobei die NTC-Sensorelemente (51, 52) durch die Anschlusskappen (71, 72) parallel angeschlossen werden.

9. Verfahren nach einem der Ansprüche 7 oder 8, wobei die Anschlusskappen (71, 72) durch zumindest teilweises Eintauchen des keramischen Körpers (6) in eine Metallisierungspaste, mittels Sputtern, mittels Flammspritzen oder mittels Plasmaspritzen aufgebracht werden.

10. Verfahren nach einem der Ansprüche 7 bis 9, wobei durch eine mechanische Bearbeitung zumindest einer der Anschlusskappen (71, 72) ein oder mehrere elektrische Verbindungen zu einer oder mehreren Elektroden (211, 212, 311, 321) mechanisch getrennt wird, so dass der Widerstand des Temperaturfühlers (1) eingestellt wird.

11. Verfahren nach Anspruch 10, wobei die mechanische Bearbeitung der Anschlusskappe (71, 72) durch Schleifen oder Trimmen erfolgt.

## Claims

1. Temperature probe (1), comprising
- at least two first ceramic plates (11, 12), each having a cutout (110, 120) in which a respective NTC sensor element (51, 52) is arranged,
- at least one second ceramic plate (21) arranged between the first ceramic plates (11, 12), wherein a respective electrode (211, 212) is arranged between the second ceramic plate (21) and the two first ceramic plates (11, 12), said electrode electrically contacting a respective one of the NTC sensor elements (51, 52),
- two third ceramic plates (31, 32), wherein the first and second ceramic plates (11, 12, 21) are arranged between the two third ceramic plates (31, 32), and wherein a respective electrode (311, 321) is arranged between the third ceramic plates (31, 32) and the first ceramic plates (11, 12), said electrode electrically contacting a respective one of the NTC sensor elements (51, 52),
- wherein the NTC sensor elements (51, 52) each have a plurality of side surfaces which are all surrounded by ceramic plates (11, 12, 21, 31, 32), and,
- wherein the first, second and third ceramic plates (11, 12, 21, 31, 32) and the NTC sensor elements (51, 52) are sintered by joint sintering of the material of the ceramic plates (11, 12, 21, 31, 32) and of the material of the sensor elements (51, 52) to form a ceramic body (6),
- and comprising two connection caps (71, 72) applied on the ceramic body (6), which connection caps are in each case electrically conductively connected to at least two electrodes (211, 212, 311, 321) and are both applied at the same end of the ceramic body (6),
- wherein the connection caps (71, 72) are configured in such a way that one or more connections between the at least one connection cap (71, 72) and one or more of the electrodes (211, 212, 311, 321) is disconnectable by means of mechanical processing of at least one of the connection caps (71, 72), such that the resistance of the temperature probe (1) is adjustable.

2. Temperature probe according to Claim 1,
- wherein the ceramic plates (11, 12, 21, 31, 32) and the NTC sensor elements (51, 52) are joined together as unsintered materials and are sintered in a joint sintering process to form the ceramic body.

3. Temperature probe according to either of the preceding claims, comprising
- a plurality of at least three first ceramic plates (11, 12, 13), each having a cutout (110, 120, 130) in which an NTC sensor element (51, 52, 53) is arranged, and
- a plurality of second ceramic plates (21, 22),
- wherein the first and second ceramic plates (11, 12, 13, 21, 22) are arranged alternately one above another between the third ceramic plates (31, 32),
- wherein each second ceramic plate (21, 22) is arranged directly between two first ceramic plates (11, 12, 13), and
- wherein a respective electrode (211, 212) for contacting the NTC sensor elements (51, 52, 53) is arranged between the first and second ceramic plates (11, 12, 13, 21, 22).

4. Temperature probe according to any of the preceding claims, comprising at least two fourth ceramic plates (41, 42), wherein the first, second and third ceramic plates (11, 12, 21, 31, 32) are arranged between the at least two fourth ceramic plates (41, 42), and wherein the at least two fourth ceramic plates (41, 42) are sintered jointly with the first, second and third ceramic plates (11, 12, 21, 31, 32) and the NTC sensor elements (51, 52) to form the ceramic body (6).

5. Temperature probe according to any of the preceding claims, wherein the NTC sensor elements (51, 52) have a perovskite structure comprising the elements Y, Ca, Cr, Al, 0 or a spinel structure comprising the elements Ni, Co, Mn, 0, and wherein the ceramic plates (11, 12, 21, 31, 32, 41, 42) comprise aluminium oxide or a glass ceramic or consist of aluminium oxide or a glass ceramic.

6. Temperature probe according to any of the preceding claims,
wherein one or more connections between the connection caps (71, 72) and one or more of the electrodes (211, 212, 311, 321) are disconnected in order to adjust the resistance of the temperature probe (1).

7. Method for producing a temperature probe (1) according to any of Claims 1 to 6, comprising the following steps
- providing a plurality of unsintered ceramic films (15, 16, 25, 35, 26) for forming the ceramic plates (11, 12, 21, 31, 32),
- introducing unsintered sensor material (50) into cutouts (110, 120, 130) of at least two ceramic plates (11, 12, 21, 31, 32) for forming the sensor elements (51, 52) and applying electrodes on the ceramic films for contacting the sensor elements (51, 52),
- jointly sintering the ceramic films (15, 16, 25, 35, 36) to form a ceramic body,
- applying at least two connection caps (71, 72) at the same end of the ceramic body (6), such that the connection caps (71, 72) are in each case electrically conductively connected to at least two electrodes (211, 212, 311, 321),
- wherein the connection caps (71, 72) are configured in such a way that one or more connections between the at least one connection caps (71, 72) and one or more of the electrodes (211, 212, 311, 321) are disconnectable by means of mechanical processing of at least one of the connection cap (71, 72), such that the resistance of the temperature probe (1) is adjustable.

8. Method according to Claim 7, wherein the NTC sensor elements (51, 52) are connected in parallel by the connection caps (71, 72).

9. Method according to either of Claims 7 and 8, wherein the connection caps (71, 72) are applied by at least partly dipping the ceramic body (6) into a metallization paste, by means of sputtering, by means of flame spraying or by means of plasma spraying.

10. Method according to any of Claims 7 to 9, wherein one or more electrical connections to one or more electrodes (211, 212, 311, 321) is mechanically disconnected by mechanical processing of at least one of the connection caps (71, 72), such that the resistance of the temperature probe (1) is adjusted.

11. Method according to Claim 10, wherein the mechanical processing of the connection cap (71, 72) is carried out by grinding or trimming.

## Revendications

1. Capteur de température(1), comportant
- au moins deux premières plaquettes céramiques (11, 12) qui présentent chacune un évidement (110, 120) dans lequel est disposé un élément capteur NTC (51, 52),
- au moins une deuxième plaquette céramique (21) disposée entre les premières plaquettes céramiques (11, 12), dans lequel entre la deuxième plaquette céramique (21) et les deux premières plaquettes céramiques (11, 12) est disposée une électrode (211, 212) respective qui est respectivement en contact électrique avec l'un des éléments capteurs NTC (51, 52),
- deux troisièmes plaquettes céramiques (31, 32), dans lequel, entre les deux troisièmes plaquettes céramiques (31, 32) sont disposées les premières et deuxièmes plaquettes céramiques (11, 12, 21), et dans lequel entre les troisièmes plaquettes céramiques (31, 32) et les premières plaquettes céramiques (11, 12) est disposée une électrode (311, 321) respective qui est respectivement en contact électrique avec l'un des éléments capteurs NTC (51, 52),
- dans lequel les éléments capteurs NTC (51, 52) sont chacun entourés de toutes parts par des plaquettes céramiques (11, 12, 21, 31, 32) et
- dans lequel les premières, la deuxième et les troisièmes plaquettes céramiques (11, 12, 21, 31, 32) et les éléments capteurs NTC (51, 52) sont frittés par frittage commun du matériau des plaquettes céramiques (11, 12, 21, 31, 32) et du matériau des éléments capteurs (51, 52) afin d'obtenir un corps céramique (6),
- et comportant deux capuchons de raccordement (71, 72) placés sur le corps céramique (6), qui sont respectivement reliés de manière électriquement conductrice à au moins deux électrodes (211, 212, 311, 321) et sont tous deux placés sur une même extrémité du corps céramique (6),
- dans lequel les capuchons de raccordement (71, 72) sont réalisés de manière à ce qu'une ou plusieurs liaisons dudit au moins un capuchon de raccordement (71, 72) à une ou plusieurs des électrodes (211, 212, 311, 321) puissent être séparées par usinage mécanique d'au moins l'un des capuchons de raccordement (71, 72), de manière à ce que la résistance du capteur de température (1) soit réglable.

2. Capteur de température selon la revendication 1,
- dans lequel les plaquettes céramiques (11, 12, 21, 31, 32) et les éléments capteurs NTC (51, 52) sont assemblés sous la forme de matériaux non frittés et sont frittés par un processus de frittage commun pour former le corps céramique (6).

3. Capteur de température selon l'une quelconque des revendications précédentes, comportant
- une pluralité d'au moins trois premières plaquettes céramiques (11, 12, 13) comportant respectivement un évidement (110, 120, 130) dans lequel est disposé un élément capteur NTC (51, 52, 53), et
- une pluralité de deuxièmes plaquettes céramiques (21, 22),
- dans lequel les premières et deuxièmes plaquettes céramiques (11, 12, 13, 21, 22) sont disposées en alternance les unes sur les autres entre les troisièmes plaquettes céramiques (31, 32),
- dans lequel une plaquette céramique (21, 22) sur deux est disposée directement entre deux premières plaquettes céramiques (11, 12, 13), et
- dans lequel, entre les premières et deuxièmes plaquettes céramiques (11, 12, 13, 21, 22) est disposée une électrode (211, 212) respective destinée à être mise en contact avec les éléments capteurs NTC (51, 52, 53).

4. Capteur de température selon l'une quelconque des revendications précédentes, comportant au moins deux quatrièmes plaquettes céramiques (41, 42), dans lequel les premières, deuxièmes et troisièmes plaquettes céramiques (11, 12, 21, 31, 32) sont disposées entre lesdites au moins deux quatrièmes plaquettes céramiques (41, 42) et dans lequel lesdites au moins deux quatrièmes plaquettes céramiques (41, 42) sont frittées avec les premières, deuxièmes et troisièmes plaquettes céramiques (11, 12, 21, 31, 32) et les éléments capteurs NTC (51, 52) pour former le corps céramique (6).

5. Capteur de température selon l'une quelconque des revendications précédentes, dans lequel les éléments capteurs NTC (51, 52), qui comprennent une structure de pérovskite, comportent les éléments Y, Ca, Cr, Al, 0, ou ceux qui comprennent une structure de spinelle comportent les éléments Ni, Co, Mn, 0 et dans lequel les plaquettes céramiques (11, 12, 21, 31, 32, 41, 42) comportent de l'oxyde d'aluminium ou une vitrocéramique ou sont constituées d'oxyde d'aluminium ou d'une vitrocéramique.

6. Capteur de température selon l'une des revendications précédentes,
dans lequel une ou plusieurs liaisons des capuchons de raccordement (71, 72) à une ou plusieurs des électrodes (211, 212, 311, 321) est/sont séparée(s) afin de régler la résistance du capteur de température (1).

7. Procédé de fabrication d'un capteur de température (1) selon l'une quelconque des revendications 1 à 6, comprenant les étapes consistant à
- fournir plusieurs feuilles céramiques non frittées (15, 16, 25, 35, 26) pour former les plaquettes céramiques (11, 12, 21, 31, 32),
- introduire un matériau de capteur non fritté (50) dans des évidements (110, 120, 130) d'au moins deux plaquettes céramiques (11, 12, 21, 31, 32) afin de former les éléments capteurs (51, 52) et placer des électrodes sur les feuilles céramiques pour les mettre en contact avec les éléments capteurs (51, 52),
- fritter en commun les feuilles céramiques (15, 16, 25, 35, 36) pour former un corps céramique,
- placer au moins deux capuchons de raccordement (71, 72) sur une même extrémité du corps céramique (6) de manière à ce que les capuchons de raccordement (71, 72) soient respectivement reliés de manière électriquement conductrice à au moins deux électrodes (211, 212, 311, 321),
- dans lequel les capuchons de raccordement (71, 72) sont réalisés de manière à ce qu'une ou plusieurs liaisons dudit au moins un capuchon de raccordement (71, 72) à une ou plusieurs électrodes (211, 212, 311, 321) puissent être séparées par usinage mécanique d'au moins l'un des capuchons de raccordement (71, 72), afin que la résistance du capteur de température (1) soit réglable.

8. Procédé selon la revendication 7, dans lequel les éléments capteurs NTC (51, 52) sont raccordés en parallèle par l'intermédiaire des capuchons de raccordement (71, 72).

9. Procédé l'une quelconque des revendications 7 ou 8, dans lequel les capuchons de raccordement (71, 72) sont placés en plongeant au moins partiellement le corps céramique (6) dans une pâte de métallisation, par pulvérisation, par projection à la flamme ou par projection au plasma.

10. Procédé selon l'une quelconque des revendications 7 à 9, dans lequel une ou plusieurs liaisons électriques à une ou plusieurs électrodes (211, 212, 311, 321) sont séparées mécaniquement par usinage mécanique d'au moins l'un des capuchons de raccordement (71, 72), de manière à régler la résistance du capteur de température (1).

11. Procédé selon la revendication 10, dans lequel l'usinage mécanique du capuchon de raccordement (71, 72) s'effectue par meulage ou ébavurage.
